# EUROPEAN PATENT APPLICATION

(11) **EP 4 559 707 A1**
(43) Date of publication of application: **28.05.2025**
(21) Application number: 24215404.5
(22) Date of filing: 26.11.2024
(51) Int. Cl.: B60K 1/00, B60K 15/05

(54) **MOTOR VEHICLE WITH IMPROVED ELECTRIC CHARGING SOCKET DOOR**

(30) Priority: 27.11.2023 IT 202300025173
(71) Applicant: FERRARI S.p.A., 41100 Modena (IT)
(72) Inventor: GALAFASSI, Stefano, 41100 MODENA (IT)
(74) Representative: Studio Torta S.p.A.

(57) **Abstract**

A motor vehicle (1) includes a rechargeable electric power source (3), a body portion (2), a charging compartment (5) located on the body portion (2), an electric charging socket (4) located inside the charging compartment (5) and connected to the rechargeable electric power source (3), and a door (6) coupled to the body portion (2) in a movable manner between a closed position, in which the door (6) closes the charging compartment (5), and an open position, in which the door (6) is internally concealed by the body portion (2), thereby making the charging compartment (5) accessible from the outside, such that an external charging source can be connected to the electric charging socket (4) to enable a charging process of the rechargeable electric power source (3), a motorized mechanism (9) configured to drive the door (6) from the closed position to the open position along a path (P), characterized in that the path (P) comprises a first section (P1) starting from the closed position having at least one component directed toward the electric charging socket (4) and a second section (P2) terminating at the open position and directed transversely with respect to said component.

## Description

### CROSS-REFERENCE TO RELATED APPLICATIONS

This patent application claims priority from Italian patent application no. 102023000025173 filed on November 27, 2023, the entire disclosure of which is incorporated herein by reference.

### TECHNICAL FIELD

The invention relates to a motor vehicle, in particular comprising at least one electric powertrain.

### PRIOR ART

Some motor vehicles provided with an electric powertrain, i.e. hybrid or electric vehicles, include a rechargeable power source, such as a battery, and a charging socket to receive electrical power from an external source, for example an EV charging station.

Said motor vehicle are commonly known as plug-in hybrid or electric vehicles.

The charging socket is normally located inside a charging compartment obtained on the body and covered by a door that is movable between a closed position, in which is actually covers the charging compartment, and a position in which it makes the latter accessible to users.

In some cases, the door is of the retractable type; in other words, in the open position, the door is concealed by the body of the motor vehicle, so that it is invisible to those who proceed with connecting the charging socket to the external source.

In this way, the aesthetic value of the motor vehicle is generally improved.

On the other hand, known mechanisms to move retractable doors to the open position are bulky, so that the charging compartment must consequently be deeper.

Therefore, in the closed position, the distance between the door and the charging socket is increased.

This corresponds to a further drawback, namely that the use of the charging socket generally becomes more uncomfortable, in addition to the drawback linked to the large size of known mechanisms.

Another drawback associated with the size of known mechanisms corresponds to a need for abundant free space inside the body, which for some vehicles could be a significant problem.

Owing to the above, the drawbacks mentioned herein need to be reduced or eliminated.

An object of the invention is to fulfil the need discussed above, preferably in a simple fashion.

### DESCRIPTION OF THE INVENTION

Said object is reached by a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a side view of a rear portion of a motor vehicle according to the invention;
- figure 2 is similar to figure 1 and shows a door for covering an electric charging socket of the motor vehicle in a different operating configuration than the one of figure 1,

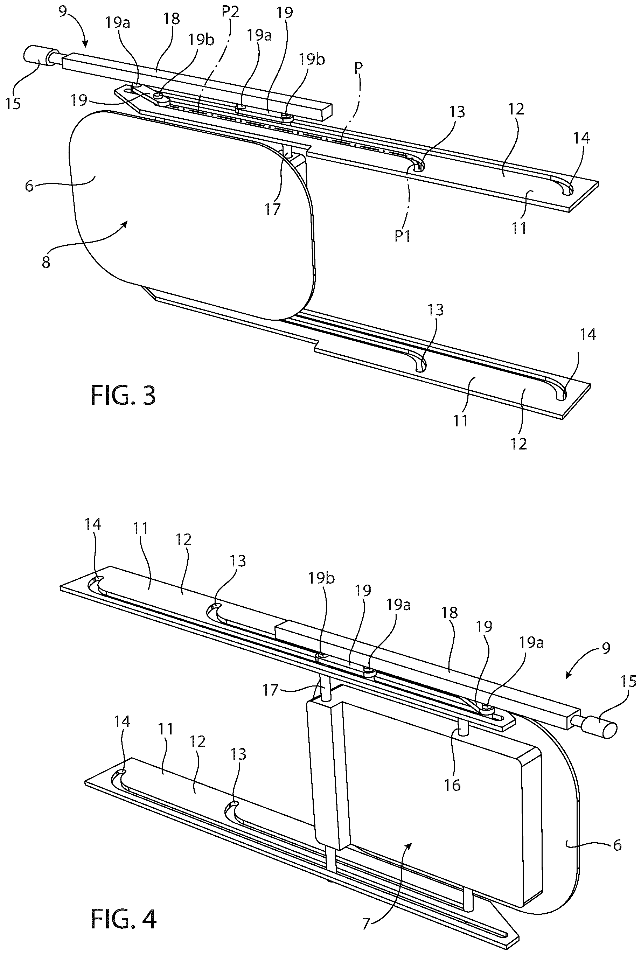

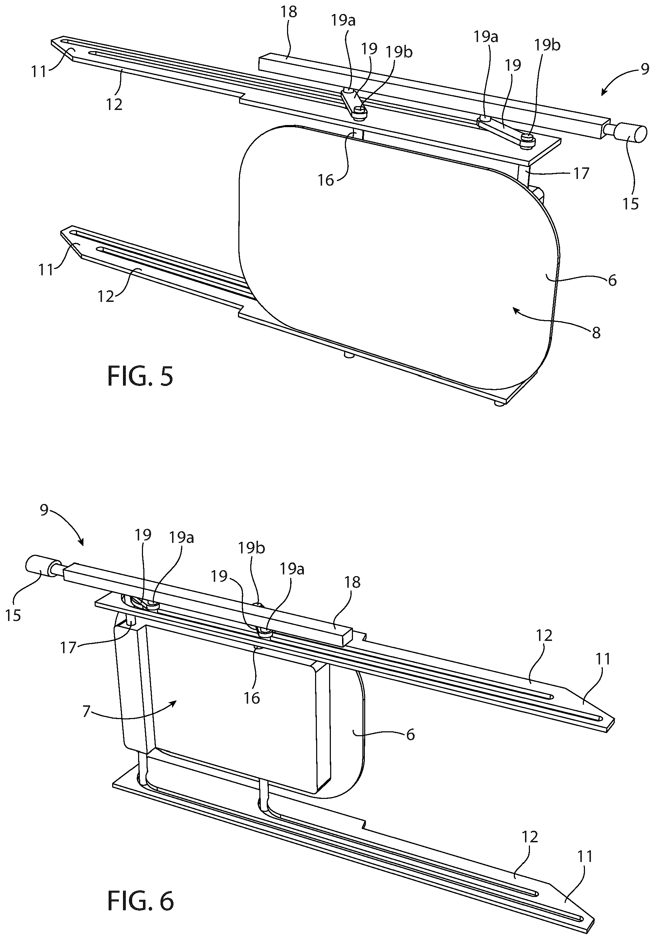

- figures 3, 5 are perspective views, on a larger scale, of a mechanism for moving the door according to the respective configurations of figures 1, 2, and
- figures 4, 6 are similar to figures 3, 5, respectively, but according to opposite perspective points of view.

### EMBODIMENTS OF THE INVENTION

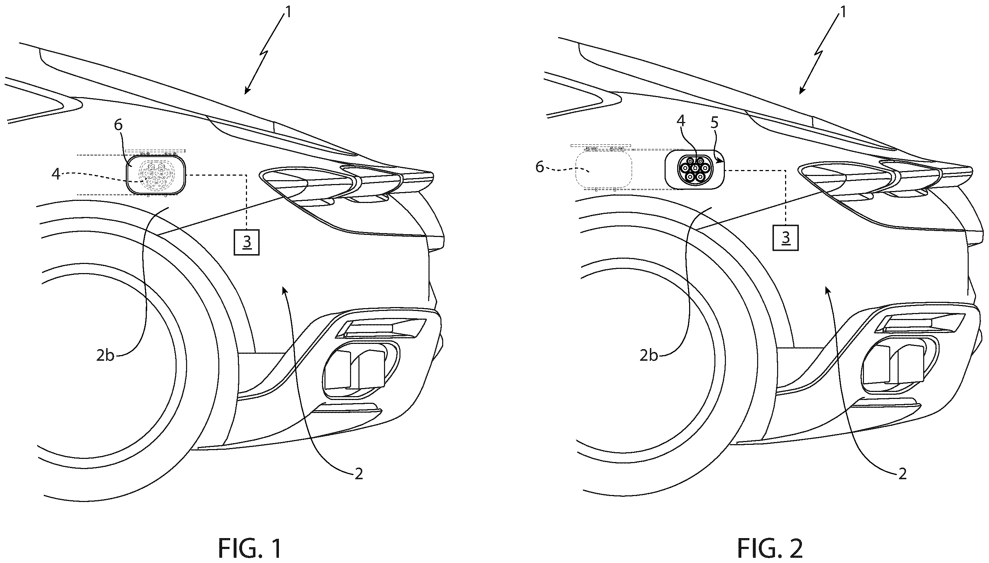

In figure 1, reference number 1 is used to indicate, as a whole, a motor vehicle.

Like all motor vehicles, the motor vehicle 1 comprises a body 2 including the frame and the shell of the motor vehicle 1.

The motor vehicle 1 has at least one known electric powertrain, which is not shown herein. Therefore, the motor vehicle 1 is of the hybrid or electric kind.

Furthermore, the motor vehicle 1 comprises a rechargeable electric power source 3, for example one or more batteries interconnected with one another.

In order to charge the source 3, the motor vehicle 1 comprises a suitable electric charging socket 4 connected to the source 3.

The socket 4 is located in a corresponding charging compartment 5 obtained on a portion of the body 2, namely having outlines defined by said portion.

The portion of the body 2 specifically comprises a fender 2b of the motor vehicle 1.

The socket 4 can be connected to known external charging sources, which are not shown herein, such as an EV charging station, a home power network, another battery, etc., for example by means of wired connections.

The connection of the socket 4 to an external source allows the source 3 to be charged.

In the embodiment of figure 1, the charging compartment 5 is located on a rear portion of the body 2, including the rear fender 2b, even though this is a mere non-necessary example.

The motor vehicle 1 comprises a door 6 to selectively cover the charging compartment 5.

The door 6 has a thickness and at least two faces 7, 8 opposite one another according to the direction of the thickness.

The door 6 is coupled to the portion of the body 2 in the area of the charging compartment 5 in a movable manner, so as to move between an open position and a closed position.

In the closed position, the door 6 closes or covers the charging compartment 5 with the face 7 facing the charging compartment 5 and, in particular, the socket 4, whereas the face 8 faces the outside of the motor vehicle 1.

More in detail, in the closed position, the door 6 or, more in particular, the face 8 is flush with the portion of the body 2.

On the other side, in the open position, the door 6 is internally concealed by the portion of the body 2, thus making the charging compartment 5 accessible from the outside, in particular from the outside of the motor vehicle 1. In this way, the socket 4 can be connected to the external source, so that the source 3 can be subjected to a charging process.

More precisely, in the open position, the door 6 is arranged on a compartment (not shown) obtained behind the portion of the body 2 (towards the inside of the motor vehicle 1) or behind the fender 2b, in particular with the face 8 facing an inner side of the portion of the body 2 or of the fender 2b.

Therefore, in this case, the door 6 is hidden by or behind the fender 2b, in the open position.

The compartment in which the door 6 is hidden in the open position is lateral, according to a longitudinal or travel direction of the motor vehicle 1, with respect to the charging compartment 5, which is exposed towards the outside of the motor vehicle 1 with the door 6 in the open position.

In particular, in the open position, the door 6 is arranged in front of the charging compartment 5, again according to the travel direction of the motor vehicle 1. However, this is not strictly necessary, since, in other variants that are not shown herein, the door 6 could also be arranged at the back with respect to the charging compartment 5 in the open position, according to the travel direction of the motor vehicle 1.

In general, in this description, expressions such as along or according to the travel direction of the motor vehicle 1 are not limited to a direction going from the rear portion towards the front portion of the motor vehicle 1, but also include a direction going from the front portion towards the rear portion of the motor vehicle. Therefore, both opposite directions along the longitudinal direction of the motor vehicle 1 can be considered as possible alternative embodiments of the travel direction of the motor vehicle 1. This may apply throughout the description.

Preferably, the compartment in which the door 6 is hidden in the open position is at the same height as the charging compartment 5.

In the embodiment of figure 2, showing the door 6 in the open position, the face 7 faces the inside of the motor vehicle 1, while the face 8 faces an inner side of the portion of the body 2 or of the fender 2b.

Preferably, the motor vehicle 1 comprises an actuator assembly or motorized mechanism 9, namely including a motor 15, for example an electric motor, configured to automatically move the door 6, for example in response to commands given by a user.

In the open position of the door 6, the user does not see the door 6 as it is hidden by the portion of the body 2.

The commands can be provided by the user through one or several known devices, such as physical or virtual buttons, levers, voice detectors, touch-sensitive elements and the like. Therefore, this disclosure will not provide further specific details on the means or devices to be used to provide the actuator assembly 9 with commands.

The actuator assembly 9 is configured to move the door 6 from the closed position to the open position and preferably vice versa along a path P.

Furthermore, the actuator assembly 9 preferably moves the door 6 along the path P with a fixed orientation, in particular of the faces 7, 8, which, more in particular, remain substantially parallel to the travel direction of the motor vehicle 1.

The path P is the one covered by a point of the door 6; in this case, the orientation of the door 6 moving along the path is fixed, so that any point of the door 6 covers a path corresponding to the path P, since the distance between any point of the door 6 and the point moving along the path P remains fixed during the movement of the door 6 by means of the actuator assembly 9.

The path P comprises a section P1 starting from the closed position of the door 6 and a section P2 ending in the open position.

The section P1 has at least one component directed towards the socket 4, namely it extends along a depth direction of the charging compartment 5. In other words, the section P1 is configured or extends in such a way that the door 6 moves closer the socket 4 when moving along the section P1 from the closed position towards the open position.

The section P2 is directed transversely with respect to the aforementioned component of the section P1.

The section P2 preferably is rectilinear; in particular, the section P2 is parallel to the travel direction of the motor vehicle 1.

In practice, the door 6 moving along the path P from the closed position to the open position gets, at first, into the charging compartment 5 and then moves laterally with respect to the charging compartment 5, in particular along the travel direction of the motor vehicle 1, so as to reach the compartment in which it is hidden in the opening position.

More in detail, the section P1 has an elbow-like shape between a point corresponding to the closed position and an end of the section P2.

Considering a pitch axis of the motor vehicle 1, namely a horizontal axis perpendicular to the travel direction, the point corresponding to the closed position is the outermost point of the path P, corresponding to the door 6 flush with the portion of the body 2.

The points of the section P2 specifically have a constant coordinate with respect to the pitch axis, thus defining the innermost points of the path P with respect to the pitch axis. However, this is not necessary, so that the section P2 could not be aligned with the travel direction of the motor vehicle 1.

The section P1 extends, in particular elbow-wise, from the outermost point to the innermost point of the path P or from the outermost point of the path P to the innermost point of the section P1, the latter innermost point coinciding with an end of the section P2.

The actuator assembly 9 comprises, in particular, a guiding device 10 having two guiding bodies 11 located above and under the door 6, respectively. The guiding bodies 11 may not necessarily be two, so that one of the guiding bodies 11 may, for example, be absent.

The adverbs above and under refer to the yaw axis of the motor vehicle 1 orthogonal to the pitch axis and to the travel direction.

Specifically, the door 6 is arranged between the guiding bodies 11.

The guiding bodies 11 comprise, in particular, two respective plates 12. The plates 12 substantially extend on planes defined by the pitch axis and the travel direction of the motor vehicle 1.

The guiding body 11 or the plate 12 is provided with a guide 13, in particular defined by a slot, extending according to the path P. Optionally, the guiding body 11 or the plate 12 is provided with a further guide 14, in particular also defined by a slot, extending according to the path of a point of the door 6 distinct from the one moving along the path P, but still corresponding to the path P. In fact, as already mentioned, each point of the door 6 follows a path with the same geometric characteristics as the path P, namely corresponding to the path P, but translated with respect to it, since the distance between any two points of the door 6 remains constant.

Therefore, guides 13, 14 are arranged in parallel to one another.

The door 6, in turn, comprises a slide 16 engaging the guide 13 in a sliding manner along the path P. Furthermore, optionally, the door 6 comprises a further slide 17 engaging the guide 14 in a sliding manner.

More precisely, the slides 16, 17 comprise respective pins that cross, in particular in a through manner, the slots of the guides 13, 14 to engage the latter in a sliding manner.

Furthermore, in particular, the actuator assembly 9 comprises a movable member 18 driven by the motor 10 in a translating manner along a rectilinear direction X.

The actuator assembly 9 further comprises connecting rods 19 with respective ends 19a hinged to the slides 16, 17. Furthermore, the connecting rods 19 comprise ends 19b opposite the ends 19a and hinged to the movable member 18.

In this way, the translation of the movable member 18 causes, through the connecting rods 19, a movement of the slides 16, 17 along the paths defined by the corresponding guides 13, 14, namely a movement of the door 6 along the path P.

Without loss of generality, according to variants that are not shown herein, the actuator assembly 9 could comprise one of the guides 13, 14, one of the slides 16, 17 and one of the connecting rods 19, instead of both the guides 13, 14, the slides 16, 17 and the connecting rods 19.

The rectilinear direction X preferably is parallel to the section P2, i.e. to the travel direction of the motor vehicle 1.

The guides 13, 14 extend, in particular, behind the face 8 of the door 6.

The motor 15 can be any type of electric motor provided with a casing fixed to the body and one or more transmission elements configured to cause a translation of the movable member 18 along the axis X.

Owing to the above, the advantages of the motor vehicle 1 according to the invention are evident.

The actuator assembly 9 is particularly simple in its construction and operation.

Furthermore, the actuator assembly 9 has particularly small dimensions, especially along the pitch axis of the motor vehicle 1, also thanks to the fact that the guiding bodies 11 are arranged above and under the door 6.

In this way, the charging socket 4 can be arranged particularly close to the door 6 in the closed position according to the depth direction of the charging compartment 5.

Furthermore, the compactness of the actuator assembly 9 along the pitch axis makes its installation easier, especially in cases where free spaces are relatively small.

Finally, the motor vehicle 1 according to the invention can be subjected to changes and variants, which, though, do not go beyond the scope of protection set forth in the appended claims.

In particular, the shape and the number of the components described and shown herein could be different.

## Claims

1. Motor vehicle (1) comprising
- a rechargeable electric power source (3),
- a body portion (2),
- a charging compartment (5) located on the body portion (2),
- an electric charging socket (4) located inside the charging compartment (5) and connected to the rechargeable electric power source (3), and
- a door (6) coupled to the body portion (2) in a movable manner between a closed position, in which the door (6) closes the charging compartment (5), and an open position, in which the door (6) is concealed internally by the body portion (2), thereby making the charging compartment (5) accessible from the outside, such that an external charging source can be connected to the electric charging socket (4) to enable a charging process of the rechargeable electric power source (3),
- a motorized mechanism (9) configured to drive the door (6) from the closed position to the open position along a path (P),
**characterized in that** the path (P) comprises a first section (P1) starting from the closed position having at least one component directed toward the electric charging socket (4) and a second section (P2) terminating at the open position and directed transversely with respect to said component.

2. The motor vehicle according to claim 1, wherein the second section (P2) is directed along a forward direction of the motor vehicle (1).

3. The motor vehicle according to claim 1 or 2, wherein the mechanism (9) comprises a guiding device (10) in turn comprising at least one guide (13) extending along the path (P), the door (6) comprising at least one slide (16) engaging the guide (13) slidingly along the path (P).

4. The motor vehicle according to claim 3, wherein the guiding device (10) comprises an additional guide (14) parallel to said guide (13), the door (6) comprising an additional slide (17) engaging the additional guide (14) in a sliding manner.

5. The motor vehicle according to claim 3 or 4, wherein the mechanism (9) further comprises a motor (15) and a movable member (18) driven by the motor (15) in a translating manner along a rectilinear direction (X), the mechanism (9) further comprising for each slide (16, 17) a connecting rod (19) having opposite ends (19a, 19b) respectively hinged to the movable member (18) and the corresponding slide (16, 17) .

6. The motor vehicle according to claim 5, wherein the rectilinear direction (X) is parallel to the second section (P2) .

7. The motor vehicle according to any one of claims 3 to 6, wherein the guiding device (10) is arranged above or below the door (6).

8. The motor vehicle according to any one of the preceding claims, wherein the mechanism (9) is configured to drive the door (6) with a fixed orientation along the path (P) .

9. The motor vehicle according to any one of the preceding claims, wherein the door (6) is concealed in the closed position behind a fender (2b) of the motor vehicle (1) .
